# EUROPEAN PATENT APPLICATION

(11) **EP 1 808 067 A1**
(43) Date of publication of application: **18.07.2007**
(21) Application number: 06075342.3
(22) Date of filing: 14.02.2006
(51) Int. Cl.: A01G 9/24

(54) **System for energy management in a greenhouse**

(30) Priority: 12.01.2006 NL 1030906
(71) Applicant: Nederlandse Organisatie voor Toegepast-Natuurwetenschappelijk Onderzoek TNO, 2628 VK Delft (NL)
(72) Inventor: Bootsveld, Nicolaas Richardus, 7328 LB Apeldoorn (NL); Krosse, Luciënne J. W. M., 6951 HX Dieren (NL)
(74) Representative: Winckels, Johannes Hubertus F.

(57) **Abstract**

System for energy management in a greenhouse (1) which is arranged for the transfer of energy incoming from outside, like sun radiation (2), to plants (5) inside the greenhouse, comprising interception means (3, 7, 10) for intercepting at least part of the radiation energy incoming to the greenhouse or received within the greenhouse respectively, and means (9) for the conversion and/or storage of the intercepted energy. Control means (8) or the interception means may be arranged to intercept at least part of the quantitative or qualitative surplus between said incoming or received energy and the energy needed for the plants inside the greenhouse. The interception means may e.g. comprise reflective surfaces (3,10), prisms or lenses. The interception means may be arranged to pass, from the incoming or received energy respectively, the part of which the wavelength is inside an area which is relevant for the photosynthesis of the plants, to those plants, and the part of which the wavelength is outside that area which is relevant for the photosynthesis of the plants, to said means for the conversion and/or storage of the intercepted energy.

## Description

### Field

System for energy management in a greenhouse, arranged for the transfer of energy incoming from outside, like sun radiation, to plants inside the greenhouse.

### Background

A greenhouse in the Netherlands is built for maximum light yield. An ancient gardener's wisdom says that 1% more light gives 1% more crop. However, this rule does not apply in summer time, because the growth of a plant is also limited by other factors, such as the temperature, the speed at which moisture and nutriments can be taken in and the availability of CO₂ for photosynthesis. A strong growth in this period is also less relevant than a good growth in the other seasons. In short: during the summer more light than necessary is reveiced in the greenhouse and certainly to much warmth. Sun radiation consists for the half of infrared radiation. Beyond the summer priod much warmth is needed, which is usually generated by burning natural gas.

By different organizations a greenhouse system is being searched for that does not need fossil fuels or that even generates net energy, of course without influencing negatively the growth and crop of the plants.

### Summary

The present invention is among others based on the fact that only a limited part of the wavelength spectrum is essential for the plant, namely the part being called "Photosynthetical Active Radiation" (PAR), in which the colours red and orange (wavelength area 600-700 nm) dominate. The conclusion may thus be, that from the (sun)light incoming from outside the greenhouse the PAR spectrum ("PAR light") should be transferred to the plants, but that the light outside that spectrum ("non-PAR light") - in large part situated in the infrared (IR) spectrum) - may be intercepted and be used for other, more useful purposes as high-quality energy source, without damaging the plant growth and/or fruit crop. Moreover, during periods (e.g. during the summer) in which light and warmth radiation are larger than required for the plants, even part of the PAR-light can be intercepted and used as high-quality energy.

Based on the said view, the present invention comprises thus a system for energy management in a greenhouse which is arranged for the transfer of energy incoming from outside, like sun radiation, to plants inside the greenhouse, comprising interception means for intercepting at least part of the radiation energy incoming to the greenhouse or received within the greenhouse respectively, and means for the conversion and/or storage of the intercepted energy.

The system may comprise control means that are arranged for activating the interception means when the incoming or received energy respectively results into a quantitative or qualitative surplus compared to the energy that is needed for heating the plants inside the greenhouse. These control means may for example be able to measure the quantity and/or quality of the incoming or received energy respectively, which compare the need for the plants in the greenhouse for growth and/or crop boosting, and adjust the interception means in a way that the surplus energy is intercepted so that it can be used in another way.

The interception means may be arranged for interception of at least part of the surplus, if the incoming or received energy respectively shows a quantitive or qualitieve surplus compared to the energy needed for the plants inside the greenhouse.

In a more detailed embodiment the interception means may comprise e.g. one or more mirrors, prisms or lenses.

Referring to the said about " PAR light" and "non-PAR light", the interception means may be arranged in order to pass, from the incoming or received energy respectively, the part of which the wavelength is inside an area that is substantially relevant for the plants - the "PAR spectrum"- , at least largely to those plants, and the part of which the wavelength is outside that area that is substantially relevant for the plants - the "non-PAR spectrum" (from which IR is an important component) - at least largely to said means for the conversion and/or storage of the intercepted energy. In case of use of mirrors, those mirrors may comprise for example a wavelength selective coating. Use can be made also of the natural properties of prisms and lenses to deflect or to focuss differently light from different wavelengths by the different refractive indexes for different wavelengths.

The said means for the conversion and/or storage of the intercepted energy may comprise one or more energy collectors to which the energy, intercepted by the interception means, is supplied. Such energy collectors e.g. may comprise one of more channels (e.g. tubes, pipes) leading through the greenhouse through which a fluid is led, and which, are irradiated at least via part of the interception means, by which the fluid is heated (first calculations show a temperature of the order of magnitude of 100 °C).

The warmth being collected and removed e.g. by the channels or tubes can be supplied to the said means for the conversion and/or storage of the intercepted energy, e.g. to one or more heat pumps or conversion modules which are arranged for the conversion of the intercepted energy into electricity. Such a conversion module can for example be an Organic Rankine Cycle (ORC) based module.

### Exemplary embodiments

Figure 1 shows a first exemplary embodiment of the invention;
Figure 2 shows a second exemplary embodiment of the invention.

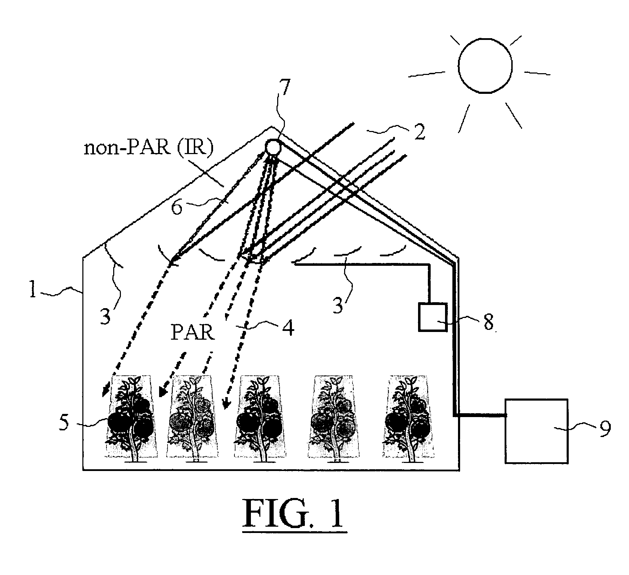

Figure 1 shows a greenhouse (1) which is arranged for the transfer of energy incoming from outside, like sun radiation 2, to plants 5 inside the greenhouse. The sun radiation 2 can be intercepted partly by interception means , in this exemplary embodiment formed by a series of mirrors 3 which intercept part of incoming or received radiation respectively in the greenhouse and reflect to a (tubular) channel 7 being heated by that reflecting (largely IR) radiation. A fluid transport mean, for example water, is streaming through the tube 7, which distributes the intercepted warmth to means 9 for conversion and/or storage of the intercepted energy.

Control means 8 can activate the interception means 3 (in this case turning the mirrors 3 in the right direction when the incoming or received energy respectively results in a quantitative or qualitative surplus compared to the energy which is needed for heating the plants inside the greenhouse). The control means 8 may also comprise sensors etc. for that which detect the incoming quantity (and the spectrum from that possibly) and compare one and another thing to the quantity and sort of radation that is useful or optimal respectively for the growth of the plants and/or its fruit crop.

The mirrors working as interception means can for example be transparent for the said PAR spectrum, but reflecting for the non-PAR spectrum that is not relevant for the plants 5. They are thus arranged for the interception of the surplus (non-PAR spectrum between incoming sun radiation (PAR and non-PAR spectrum) compared to the energy needed for the plants inside the greenhouse (only PAR spectrum), at least largely that surplus.

Besides that interception means may comprise reflective surfaces, such as the mirrors 3, these can for example also comprise prisms or lenses.

As the figure shows, the interception means - in this case the partially transparent mirrors 3 - and the control means 8 are arranged in order to pass, from the incoming or received energy respectively (sun radiation), the part of which the wavelength is inside an area which is relevant for the photosynthesis of the plants and the part of which the wavelength is outside that area which is relevant for the photosynthesis of the plants, to said means 7 and 8.

The mirrors 3 may be partially transparent en possibly comprise a wavelength selective coating for that.

For the conversion and/or storage of the intercepted energy, the tubes or tubural channels shown in the figure 1 serve as energy collectors to which the energy intercepted by the mirrors 3 is supplied. Through this tube 7 leading throughout the greenhouse a fluid, whether evaporating or not, is led which is added to for example one or more heat pumps or to conversion modules being arranged for the conversion of the supplied energy to electricity, what is for example an Organic Rankine Cycle based module.

It is noticed that by turning off or reflecting respectively of (part of) the incoming radiation it is possible to intercept warmth via collectors as the tube system 7 at a temperature that is higher than the temperature of the air in the greenhouse (provided that the temperature in the fluid can reach a temperature of about 100 °C).

The mirrors 3 can be made of sufficiently light material so that they can be applied in rows to e.g. wires in the length direction of the greenhouse. By moving the position of the wires each row of mirrors - controlled by the control means 8 - can be turned, so that the sun light is concentrated at the horizontal tube 7. Each row of mirrors is adjusted separately for this and follows the position of the sun. The horizontal tube collecting warmth preferably has a coating or colour that boosts the absorption of warmth radiation.

Advantages of this embodiment are that:
- the length of the system is variable. A longer greenhouse can (within physically, mechanically and economically determined limitations) be equipped with a longer row of mirrors and a longer warmth collecting tube.
- the right mirrors can be applied in line with the direction of the sun light in order to not hinder the light, for example in the seasons with less light.

In the here presented embodiment the mirrors are selectively transparent for the growth spectrum of the sun radiation and reflective for the resulting part, especially the infrared. Advantage of this embodiment is that the growth spectrum remains available for the plant and the unused part does not warm the plant. In another embodiment mirrors can be fitted so small that part of the sunlight turns around the mirrors and in this way reaches the crop sufficiently.

Also in seasons with less light and a demand for warmth, sun warmth can first be concentrated at a higher temperature level than that of the air of the greenhouse. This gives possibilities then to drive other energy systems. For example, an absorption heat pump (AHP) can be driven, so that extra warmth becomes available to warm the greenhouse. The AHP extracts warmth from the environment at a temperature below the temperature of the air of the greenhouse and increases this. The net warmth stream to the greenhouse is larger than with direct use of the sun light. At a higher temperature an ORC (Organic Rankine Cycle) can also be driven in order to produce electricity. This electricity is important for the lamps in the greenhouse (growth light). Also here the original warmth becomes available again in the greenhouse.

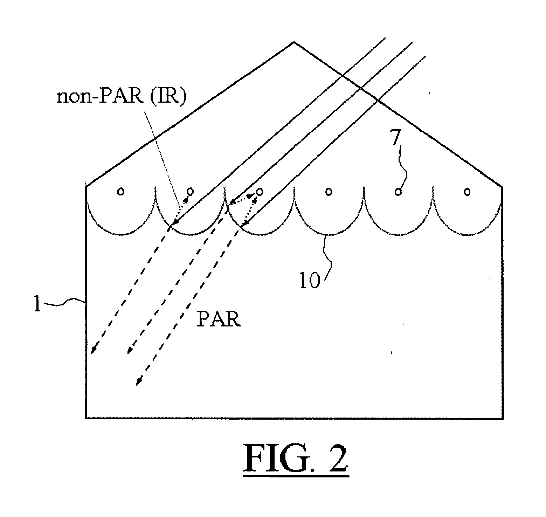

In figure 2 as interception mean use is made of partially reflective fabric, during which use is made of the property of flexible material as such fabric, that if it is hung up as figure 2 shows (to for example thin iron beams 11) the fabric takes itself to a parabola form. By providing the fabric with a partially reflective - namely PAR light transparent and non-PAR light reflective coating - and placing the tubes 7 in the focus of that, the non-PAR radiation is concentrated at the tubes 7.

## Claims

1. System for energy management in a greenhouse (1) which is arranged for the transfer of energy incoming from outside, like sun radiation (2), to plants (5) inside the greenhouse, comprising interception means (3, 7, 10) for intercepting at least part of the radiation energy incoming to the greenhouse or received within the greenhouse respectively, and means (9) for the conversion and/or storage of the intercepted energy.

2. System according to claim 1, comprising control means (8) which are arranged for activating the interception means when the incoming or received energy respectively results in a quantitative or qualitative surplus compared to the energy which is needed for heating the plants inside the greenhouse.

3. System according to claim 1, the interception means being arranged to intercept at least part of the quantitative or qualitative surplus between said incoming or received energy and the energy needed for the plants inside the greenhouse.

4. System according to claim 1, the interception means comprising one of more reflective surfaces (3, 10).

5. System according to claim 1, the interception means comprising one of more prisms.

6. System according to claim 1, the interception means comprising one of more lenses.

7. System according to claim 1, the interception means being arranged to pass, from the incoming or received energy respectively, the part of which the wavelength is inside an area which is substantially relevant for the photosynthesis of the plants, at least largely to those plants, and the part of which the wavelength is outside that area which is substantially relevant for the photosynthesis of the plants, at least largely to said means for the conversion and/or storage of the intercepted energy.

8. System according to claim 4 and 7, the interception means comprising a wavelength selective coating.

9. System according to claim 1, the means for the conversion and/or storage of the intercepted energy comprising one or more energy collectors to which de energy, intercepted by the interception means, is supplied to.

10. System according to claim 9, such a energy collector comprising a tube or channel which is led through the greenhouse, and through which an evaporating or not-evaporating fluid is passed, which tube or channel is irradiated via at least part of the interception means.

11. System according to claim 1, the means for the conversion and/or storage of the intercepted energy comprising one or more heat pumps.

12. System according to claim 1, the means for the conversion and/or storage of the intercepted energy comprising one or more conversion modules which are arranged for the conversion of the intercepted energy into electricity.

13. System according to claim 12, such a conversion module being a Organic Rankine Cycle based module.
